# FASCICULE DE BREVET EUROPEEN

(11) **EP 1 405 761 B1**
(45) Date de publication et mention de la délivrance du brevet: **25.05.2005**
(21) Numéro de dépôt: 03292267.6
(22) Date de dépôt: 15.09.2003
(51) Int. Cl.: B60Q 1/068

(54) **Capsule d'articulation pour un projecteur d'éclairage de véhicule automobile**
Kugelgelenk für Kfz-Scheinwerfer
Ball-and-socket joint for vehicle headlamp

(30) Priorité: 04.10.2002 FR 0212374
(43) Date de publication de la demande: 07.04.2004
(73) Titulaire: VALEO VISION, 93012 Bobigny Cédex (FR)
(72) Inventeur: Cavanna, Jean-François, 93700 Drancy (FR)
(74) Mandataire: Renous Chan, Véronique

(56) Documents cités:
- FR-A- 2 711 101
- US-A- 5 107 406

## Description

L'invention concerne une capsule d'articulation pour un projecteur d'éclairage de véhicule automobile.

L'invention concerne plus particulièrement une capsule d'articulation pour un projecteur d'éclairage de véhicule automobile, du type qui comporte une extrémité qui est destinée à être fixée à une face arrière d'un module d'éclairage, notamment un réflecteur, et une extrémité opposée comportant un logement recevant une tête sensiblement sphérique d'une tige de fixation d'orientation sensiblement axiale qui s'étend à partir d'une face avant d'un boîtier du projecteur pour permettre l'articulation du module d'éclairage par rapport au boîtier, du type dans lequel le logement débouche à ses deux extrémités transversales et comporte une paroi de fond, comportant une gouttière, conformée en portion de cylindre d'orientation sensiblement transversale et de courbure correspondant à celle de la tête sphérique, qui reçoit l'extrémité de la tête sensiblement sphérique, et au moins deux pattes parallèles élastiques de maintien qui s'étendent avec jeu de part et d'autre de la gouttière et de la tête sphérique, et qui comportent des bras recourbés tournés vers la gouttière dont les extrémités, conformées en portion de cylindre d'orientation sensiblement transversale et de courbure correspondant à celle de la tête sphérique, prennent appui sur la tête sphérique sensiblement à sa jonction avec la tige pour la maintenir en appui dans la gouttière.

On connaît de nombreux exemples de telles capsules d'articulation. Ces capsules sont notamment destinées à permettre un léger déplacement transversal de la tête sphérique de la tige, au contraire d'autres capsules, elles aussi connues de l'état de la technique, qui comportent un logement de forme sensiblement sphérique dans lequel est emboîté la sphère, mais qui ne permettent pas de déplacement transversal de la tête sphérique.

Le document FR 2 711 101 décrit une capsule d'articulation selon les caractéristiques techniques du préambule de la revendication 1.

Un inconvénient majeur de cette capsule, par rapport aux capsules comportant un logement de forme sphérique, est que la tête n'est maintenue que par les extrémités des bras qui enserrent la tête sphérique. De ce fait, lorsque la capsule est soumise à des sollicitations physiques telles que des vibrations en provenance du véhicule, la capsule subit une dégradation rapide dans la zone d'assemblage avec la sphère, notamment aux extrémités des bras recourbés de la capsule. Cette dégradation peut provoquer un déréglage du faisceau lumineux produit par le module d'éclairage.

Pour remédier à cet inconvénient, l'invention propose une capsule comportant des moyens supplémentaires de maintien de la tête sphérique qui permettent néanmoins un déplacement transversal de celle-ci dans la capsule.

Dans ce but, l'invention propose une capsule du type décrit précédemment, caractérisée en ce qu'elle comporte un élément supplémentaire de maintien qui est destiné à être introduit par une extrémité débouchante du logement et qui comporte au moins une portée de maintien, qui est destinée à être agencée au contact de la tête sphérique pour améliorer son maintien.

Selon d'autres caractéristiques de la capsule :
- l'élément supplémentaire de maintien comporte au moins une portée de maintien de courbure correspondant à celle de la tête sphérique ;
- l'élément supplémentaire de maintien est conformé sous la forme d'une bague comportant un trou dont un bord délimite au moins une portée de maintien ;
- le trou comporte une partie qui délimite une portée de maintien globalement sphérique et de même rayon que la tête sphérique ;
- l'élément supplémentaire de maintien comporte deux ailes d'orientation transversale dont chacune est agencée entre la gouttière et la patte voisine de la capsule, de manière à guider l'élément supplémentaire de maintien en coulissement transversal, tout en maintenant l'élément supplémentaire de maintien dans une direction perpendiculaire à la direction transversale ;
- l'élément supplémentaire de maintien comporte au moins une rampe inclinée qui est prévue pour coopérer avec la tête sphérique en vue de faciliter le centrage de la tête sphérique par rapport à l'élément supplémentaire de maintien.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale partielle d'une capsule selon l'invention recevant la tête sphérique d'une tige de fixation axiale et pourvue de son élément supplémentaire de maintien ;
- la figure 2 est une vue de dessus d'une capsule dépourvue de son élément supplémentaire de maintien et de la tête sphérique ;
- la figure 3 est une vue en perspective qui représente l'élément supplémentaire de maintien ;
- la figure 4 est une vue de dessus d'une capsule avec son élément supplémentaire de maintien et la tête sphérique montés.

Dans la description qui va suivre, des chiffres de référence identiques désignent des pièces identiques ou ayant des fonctions similaires.

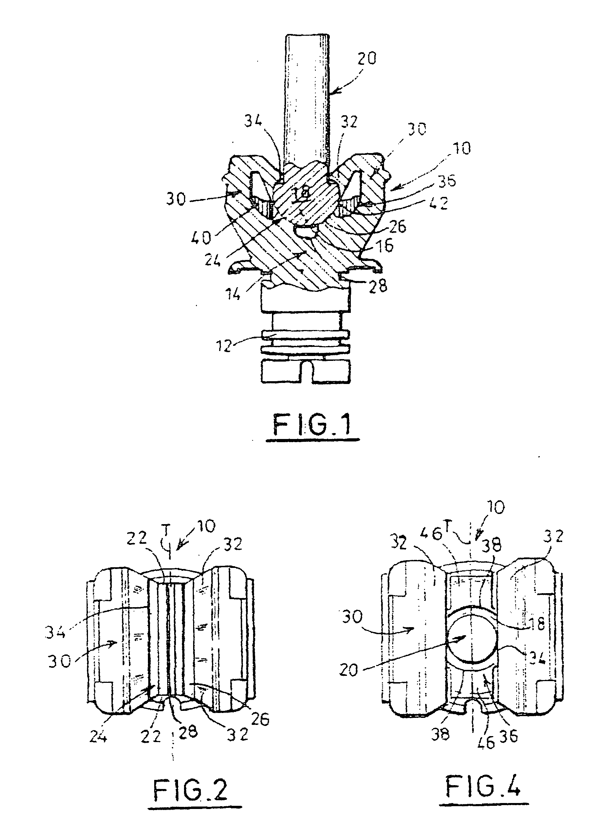

De manière connue, et comme l'illustre la figure 1, une capsule 10 d'articulation pour un projecteur (non représenté) d'éclairage de véhicule automobile comporte une extrémité 12 qui est destinée à être fixée à une face arrière d'un module d'éclairage, notamment un réflecteur (non représenté), et une extrémité opposée 14 comportant un logement 16 recevant une tête 18 sensiblement sphérique d'une tige 20 de fixation d'orientation sensiblement axiale qui s'étend à partir d'une face avant d'un boîtier (non représenté) du projecteur pour permettre l'articulation du module d'éclairage par rapport au boîtier.

De manière connue, comme l'illustre la figure 2, le logement 16 débouche à ses deux extrémités 22 transversales et il comporte une paroi de fond 24 comportant une gouttière 26 conformée en portion de cylindre, orientée suivant une direction "T" sensiblement transversale, et d'une courbure correspondant à celle de la tête 18 sphérique. La gouttière 26 reçoit l'extrémité de la tête 18 sensiblement sphérique.

Telle qu'elle a été représenté sur les figures 1 et 2, la paroi de fond 24 comporte une gouttière 26 au fond de laquelle est réalisée une rainure 28 qui permet de manière connue de limiter les frottements de la tête 18 sphérique au contact de la paroi de fond 24.

Le logement 16 comporte aussi au moins deux pattes 30 parallèles élastiques de maintien qui s'étendent avec jeu de part et d'autre de la gouttière 26 et de la tête sphérique 18. Ces pattes 30 comportent des bras recourbés 32, tournés vers la gouttière 26 dont les extrémités 34, conformées en portion de cylindre d'orientation sensiblement transversale et de courbure correspondant à celle de la tête 18 sphérique, prennent appui sur la tête 18 sphérique sensiblement à sa jonction avec la tige 20 pour la maintenir en appui dans la gouttière 26.

De manière connue, les pattes 30 sont flexibles suivant une direction perpendiculaire à la direction transversale "T" pour pouvoir s'écarter au passage de la tête 18 et pour emprisonner la tête 18 une fois qu'elle a franchi les bras 32 des pattes 30.

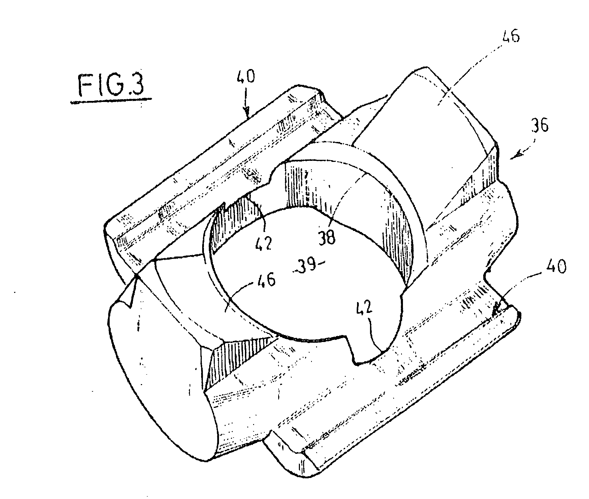

Conformément à l'invention, comme l'illustrent les figures 3 et 4, la capsule 10 comporte un élément 36 supplémentaire de maintien qui est destiné à être introduit par une extrémité 22 débouchante du logement 16 et qui comporte au moins une portée de maintien 38, d'une courbure correspondant à celle de la tête 18 sphérique, qui est destinée à être agencée au contact de la tête 18 sphérique pour améliorer son maintien.

Conformément au mode de réalisation représenté sur la figure 3, l'élément 36 supplémentaire de maintien est conformé sous la forme d'une bague qui comporte un trou central 39 sensiblement sphérique, globalement de même diamètre que la tête 18 sphérique.

Le trou 39 comporte une partie supérieure 38, du côté de la tige 20 de fixation, qui forme une portée sphérique de maintien 38 d'une courbure correspondant à celle de la tête 18 sphérique.

La partie inférieure du trou 39 est ici sensiblement cylindrique.

Dans cette configuration, la tête 18 peut donc être complètement emprisonnée dans un logement 16, délimité par le trou 39 de l'élément 36 supplémentaire de maintien, dont la partie 38 est complémentaire de la forme sphérique de la tête 18, ce qui garantit un maintien optimal de celle-ci.

L'élément 36 supplémentaire de maintien comporte, de part et d'autre du trou 39, deux ailes 40 d'orientation transversale, qui sont prévues pour être agencées chacune entre la gouttière 26 et l'une des pattes 30 voisines de la capsule 10, de manière à immobiliser l'élément 36 supplémentaire de maintien, suivant une direction perpendiculaire à la direction transversale "T", tout en permettant un déplacement transversal de l'élément 36 supplémentaire de maintien.

Le profil des ailes 40 est conformé de manière à permettre leur coulissement transversal dans le logement 16.

On note que l'élément 36 supplémentaire de maintien est introduit dans la capsule 10 avant l'insertion de la tête 18 sphérique.

Avantageusement, l'élément 36 supplémentaire de maintien comporte, transversalement de part et d'autre du trou 39, deux rampes 46 qui sont inclinées vers le centre du trou 39, et qui sont prévues pour coopérer avec la tête 18 sphérique, de manière à faciliter le centrage de la tête 18 sphérique par rapport au trou 39, lors de l'insertion de la tête 18 sphérique dans la capsule 10.

Le bord du trou 39 comporte ici deux encoches 42 diamétralement opposées, suivant une direction perpendiculaire à la direction transversale "T", qui sont destinées à permettre l'écartement des rampes 46, lors de l'insertion de la tête 18 dans la capsule 10.

A partir de la capsule 10 dépourvue de son élément 36 de maintien et de la tête 18 sphérique, telle qu'elle est représentée à la figure 2, l'élément 36 de maintien est introduit par les extrémités 22 du logement 16 et il est déplacé à coulissement transversal à l'intérieur du logement 16, jusqu'à ce qu'il soit globalement centré dans la capsule 10, comme l'illustre la figure 4.

La tête 18 sphérique est ensuite insérée dans la capsule 10, par déformation élastique des pattes 30 et des bras 32, jusqu'à ce que la tête 18 soit reçue dans le logement 16 et qu'elle soit emprisonnée dans le trou 39 de l'élément 36 de maintien, comme on l'a représenté sur les figures 1 et 4. La tête 18 conserve alors sa capacité de coulissement suivant la direction transversale "T", tout en étant maintenue de façon adéquate.

L'invention permet donc, en complément du maintien proposé par les extrémités 34 des bras 32, d'offrir un maintien supplémentaire de la tête 18 à l'aide des portées 38 de maintien, ce qui garantit une usure amoindrie de la capsule 10 et permet de diminuer les risques de déréglage du faisceau lumineux du module d'éclairage qu'elle porte.

## Revendications

1. Capsule (10) d'articulation pour un projecteur d'éclairage de véhicule automobile, du type qui comporte une extrémité (12) qui est destinée à être fixée à une face arrière d'un module d'éclairage, notamment un réflecteur, et une extrémité opposée (14) comportant un logement (16) recevant une tête sensiblement (18) sphérique d'une tige (20) de fixation d'orientation sensiblement axiale qui s'étend à partir d'une face avant d'un boîtier du projecteur pour permettre l'articulation du module d'éclairage par rapport au boîtier, du type dans lequel le logement (16) débouche à ses deux extrémités (22) transversales et comporte une paroi (24) de fond, comportant une gouttière (26), conformée en portion de cylindre d'orientation sensiblement transversale et de courbure correspondant à celle de la tête (18) sphérique, qui reçoit l'extrémité de la tête (18) sensiblement sphérique, et au moins deux pattes (30) parallèles élastiques de maintien qui s'étendent avec jeu de part et d'autre de la gouttière (26) et de la tête (18) sphérique, et qui comportent des bras (32) recourbés tournés vers la gouttière (26) dont les extrémités (34), conformées en portion de cylindre d'orientation sensiblement transversale et de courbure correspondant à celle de la tête (18) sphérique, prennent appui sur la tête (18) sphérique sensiblement à sa jonction avec la tige (20) pour la maintenir en appui dans la gouttière (26), .
**caractérisée en ce qu'**elle comporte un élément (36) supplémentaire de maintien qui est destiné à être introduit par une extrémité (22) débouchante du logement (16) et qui comporte au moins une portée (38) de maintien, qui est destinée à être agencée au contact de la tête (18) sphérique pour améliorer son maintien.

2. Capsule (10) d'articulation selon la revendication précédente, **caractérisée en ce que** l'élément (36) supplémentaire de maintien comporte au moins une portée (38) de maintien de courbure correspondant à celle de la tête (18) sphérique.

3. Capsule (10) d'articulation selon l'une quelconque des revendications précédentes, **caractérisée en ce que** l'élément (36) supplémentaire de maintien est conformé sous la forme d'une bague comportant un trou (39) dont un bord délimite au moins une portée (38) de maintien.

4. Capsule (10) d'articulation selon la revendication précédente, **caractérisée en ce que** le trou (39) comporte une partie qui délimite une portée (38) de maintien globalement sphérique et de même rayon que la tête (18) sphérique.

5. Capsule (10) d'articulation selon l'une quelconque des revendications précédentes, **caractérisée en ce que** l'élément (36) supplémentaire de maintien comporte deux ailes (40) d'orientation transversale dont chacune est agencée entre la gouttière (26) et la patte (30) voisine de la capsule (10), de manière à guider l'élément (36) supplémentaire de maintien en coulissement transversal, tout en maintenant l'élément (36) supplémentaire de maintien dans une direction perpendiculaire à la direction transversale (T).

6. Capsule (10) d'articulation selon l'une quelconque des revendications précédentes, **caractérisée en ce que** l'élément (36) supplémentaire de maintien comporte au moins une rampe (46) inclinée qui est prévue pour coopérer avec la tête (18) sphérique en vue de faciliter le centrage de la tête (18) sphérique par rapport à l'élément (36) supplémentaire de maintien.

## Patentansprüche

1. Kugelgelenk (10) für einen Kraftfahrzeug-Scheinwerfer, des Typs mit einem Ende (12), das dazu bestimmt ist, an einer Rückseite eines Beleuchtungsmoduls, insbesondere eines Reflektors, befestigt zu werden, und einem entgegengesetzten Ende (14) mit einer Lagerung (16) zur Aufnahme eines im Wesentlichen kugelförmigen Kopfes (18) einer im Wesentlichen axial ausgerichteten Befestigungsstange (20), die sich von einer Vorderseite eines Gehäuses des Scheinwerfers erstreckt, um die Schwenkbarkeit des Beleuchtungsmoduls bezüglich des Gehäuses zu ermöglichen, des Typs, bei dem die Lagerung (16) an ihren beiden transversalen Enden (22) offen ist und eine untere Wand (24) mit einer Rinne (26) aufweist, die, als im Wesentlichen quer ausgerichtetes Zylinderstück ausgebildet und mit einer dem kugelförmigen Kopf (18) entsprechenden Krümmung, das Ende des im Wesentlichen kugelförmigen Kopfes (18) aufnimmt, und wenigstens zwei parallele, elastische Haltelaschen (30) umfasst, die sich mit Spiel zu beiden Seiten der Rinne (26) und des kugelförmigen Kopfes (18) erstrecken und gebogene, der Rinne (26) zugewandte Arme (32) aufweisen, deren Enden (34), als im Wesentlichen quer ausgerichtetes Zylinderstück ausgebildet und mit einer dem kugelförmigen Kopf (18) entsprechenden Krümmung, an dem kugelförmigen Kopf (18) im Wesentlichen an seiner Verbindung mit der Stange (20) anliegen, um sie in der Rinne (26) in Anlage zu halten,
**dadurch gekennzeichnet, dass** es ein zusätzliches Halteelement (36) umfasst, das dazu bestimmt ist, über ein offenes Ende (22) der Lagerung (16) eingeführt zu werden, und das wenigstens eine Haltefläche (38) umfasst, die dazu bestimmt ist, in Kontakt mit dem kugelförmigen Kopf (18) angeordnet zu werden, um seinen Halt zu verbessern.

2. Kugelgelenk (10) nach dem vorhergehenden Anspruch,
**dadurch gekennzeichnet, dass** das zusätzliche Halteelement (36) wenigstens eine Haltefläche (38) umfasst, deren Krümmung der des kugelförmigen Kopfes (18) entspricht.

3. Kugelgelenk (10) nach einem der vorhergehenden Ansprüche,
**dadurch gekennzeichnet, dass** das zusätzliche Halteelement (36) in Form eines Rings mit einem Loch (39) ausgebildet ist, von dem ein Rand wenigstens eine Haltefläche (38) begrenzt.

4. Kugelgelenk (10) nach dem vorhergehenden Anspruch,
**dadurch gekennzeichnet, dass** das Loch (39) einen Teil umfasst, der eine insgesamt kugelförmige Haltefläche (38) mit demselben Radius wie der kugelförmige Kopf (18) begrenzt.

5. Kugelgelenk (10) nach einem der vorhergehenden Ansprüche,
**dadurch gekennzeichnet, dass** das zusätzliche Halteelement (36) zwei quer ausgerichtete Flügel (40) aufweist, die jeweils zwischen der Rinne (26) und der dem Kugelgelenk (10) benachbarten Lasche (30) angeordnet sind, um das zusätzliche Halteelement (36) bei einer Querverschiebung zu führen und gleichzeitig das zusätzliche Halteelement (36) in einer senkrecht zur Querrichtung (T) verlaufenden Richtung zu halten.

6. Kugelgelenk (10) nach einem der vorhergehenden Ansprüche,
**dadurch gekennzeichnet, dass** das zusätzliche Halteelement (36) wenigstens eine geneigte Rampe (46) umfasst, die dazu bestimmt ist, mit dem kugelförmigen Kopf (18) zusammenzuwirken, um die Zentrierung des kugelförmigen Kopfes (18) bezüglich des zusätzlichen Halteelements (36) zu erleichtern.

## Claims

1. An articulating capsule (10) for a motor vehicle headlight, of the type which has an end portion which is adapted to be fixed on a rear face of a lighting module, in particular a reflector, together with an opposed end portion (14) having a seating (16) for receiving a substantially spherical head (18) of a substantially axially oriented fastening rod (20), which extends from a front face of a casing of the headlight whereby to enable the lighting module to be articulated with respect to the casing, of the type in which the seating (16) is open at its two transverse ends (22) and has a base wall (24), which includes a channel (26) configured as a portion of a substantially transversely oriented cylinder and having a curvature corresponding to that of the spherical head (18), and which receives the end of the substantially spherical head (18), the seating further comprising at least two elastic, parallel retaining lugs (30) which extend, with a clearance, on either side of the channel (26) and on either side of the spherical head (18), and which include curved arms (32) turned towards the channel (26), and the ends (34) of which, configured as a portion of a substantially transversely oriented cylinder and having a curvature corresponding to that of the spherical head (18), bear on the substantially spherical head (18) at its junction with the rod (20) whereby to hold it in engagement in the channel (26),
**characterised in that** it includes an additional retaining element (36) which is arranged to be introduced through one open end (22) of the seating (16), and which includes at least one retaining surface (38) which is adapted to be put in contact with the spherical head (18) so as to improve its retention.

2. An articulating capsule (10) according to Claim 1, **characterised in that** the additional retaining element (36) includes at least one retaining surface (38) having a curvature corresponding to that of the spherical head (18).

3. An articulating capsule (10) according to Claim 1 or Claim 2, **characterised in that** the additional retaining element (36) is configured in the form of a sleeve including a hole (39), one edge of which defines at least one retaining surface (38).

4. An articulating capsule (10) according to Claim 3, **characterised in that** the hole (39) includes a portion which delimits a generally spherical retaining surface (38) and which is of the same radius as the spherical head (18).

5. An articulating capsule (10) according to any one of the preceding Claims, **characterised in that** the additional retaining element (36) includes two transversely oriented wing portions (40), each of which is arranged between the channel (26) and the neighbouring lug (30) of the capsule (10), whereby to guide the additional retaining element (36) in transverse sliding movement, while maintaining the additional retaining element (36) in a direction at right angles to the transverse direction (T).

6. An articulating capsule (10) according to any one of the preceding Claims, **characterised in that** the additional retaining element (36) includes at least one inclined ramp (46), which is arranged to cooperate with the spherical head (18) whereby to facilitate centring of the spherical head (18) with respect to the additional retaining element (36).
